# EUROPEAN PATENT APPLICATION

(11) **EP 4 379 598 A1**
(43) Date of publication of application: **05.06.2024**
(21) Application number: 23212098.0
(22) Date of filing: 24.11.2023
(51) Int. Cl.: G06F 40/20, G06F 40/268, G06F 40/279, G06F 40/284, G06F 40/58, G09B 21/00

(54) **A SIGN LANGUAGE TRANSLATION METHOD AND SYSTEM THEREOF**

(30) Priority: 29.11.2022 IL 29868322
(71) Applicant: Deafinitely Communication Ltd., 8500778 Omer (IL)
(72) Inventor: LIVNE, Nimrod Yaakov, 8496500 Omer (IL)
(74) Representative: Taor, Simon Edward William

(57) **Abstract**

A chat application with integrated sign language translation capabilities comprising:
a) a user interface for displaying chat messages and receiving user inputs within the chat application; b) text input receiving means for receiving a text input from a user within the chat application; c) sign language translation module configured to perform analysis of the text input; d) a search engine for searching the databases to find sign language translations for the text input; e) a display module for displaying the sign language translations in real-time within the chat application, wherein the sign language translations correspond to the text input; and integration means for seamlessly integrating the sign language translations into the chat application, wherein the sign language translations are displayed alongside the corresponding chat messages to enable real-time communication between users in text and sign language formats.

## Description

### Field of the invention

The present invention is in the field of translation means. More specifically, the invention relates to a sign language translation method and system.

### Background of the invention

The widening use of smartphones and other mobile devices with integrated image acquiring, data processing, display, and communication capabilities enables multiple input and output operations, such as data input by touch presses and multiple gestu res.

This advanced interactive user-computing device interface is highly beneficial in providing new expression and communication modes for motion, hearing, and speech-challenged persons to express their thoughts into gestures that can be interpreted and converted to other communication forms.

One of the beneficial uses of the abovementioned user-computing device interface is translating text or speech to sign language. Such a translation is highly desirable for enabling convenient and efficient communication between hearing-challenged and unchallenged community members. In contrast, many unchallenged community members are familiar with sign language but are not skilled in fluent use. Also, a sufficiently accurate and fast translation is desirable on many occasions, and textually communicating is cumbersome (e.g., when a tour guide wants to communicate with a deaf person efficiently).

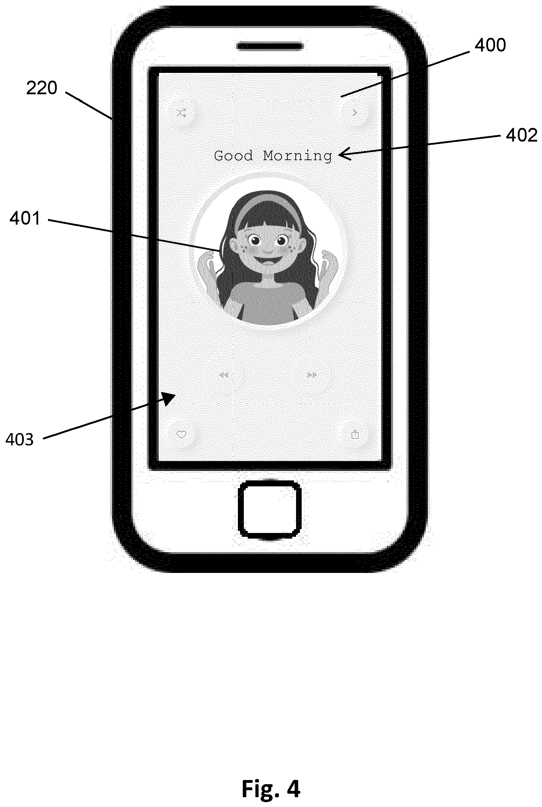

Mobile text/speech input means (e.g., touch keyboard and/or mobile device's microphones) and display means (i.e., mobile devices' screens or touchscreens, e.g., as indicated by numeral 403 in Fig. 4) are available for receiving text/speech and displaying sign language signs. However, sufficiently accurate and friendly translation between them is still a significant challenge. For example, many English words are similarly spoken (e.g., "Buy" and "By") while having different meanings, and many other words can be used in different contexts with different meanings (e.g., "On time" vs. "On the table"). Furthermore, different languages may consist of mass numbers of words, many of which are similar to the abovementioned examples, thus hardening the searching operation of a translation means for a proper sign language translation of an inputted written/spoken text. Moreover, any modern language evolves with new expressions and words, which requires continuous improvement of any translation tool.

Therefore, it is an object of the present invention to provide a sign language translation method that enables an accurate translation of sign language signs regardless of similarly written words with different meanings and phrases that are identically written in different contexts pertaining to a different meaning.

Other objects and advantages of the invention will become apparent as the description proceeds.

### Summary of the Invention

In one aspect, the present invention relates to a computer-implemented method for integrating a sign language translation system into a chat application, the method comprising:
- Receiving a text input for translation within the chat application;
- Performing analysis of the text input;
- Generating an inclusive sequence of sign language signs based on the analysis of the text input; and
- Integrating the generated sign language signs into the chat application, wherein the sign language signs are displayed to represent the translation of the text input in real-time.

In one aspect, the analysis of the text input is performed by a hierarchical analysis, including:
- Searching complete phrases of the text input in a phrases database to find corresponding sign language translations, thereby providing a fast and accurate translation of text phrases while considering the context; and
- Analyzing remaining portions of the text input by searching individual words in a words database, searching root words in a root words database, and searching morphemes and letters in corresponding databases until a sign language translation is found for the entire text input.

In one aspect, the method further comprises utilizing statistical tools to rate phrases and words correspondingly to their usage frequency in translation searches, thereby improving the speed of translation results.

In another aspect, the present invention relates to a chat application with integrated sign language translation capabilities, comprising:
- A user interface for displaying chat messages and receiving user inputs within the chat application;
- Text input receiving means for receiving a text input from a user within the chat application;
- Sign language translation module configured to perform analysis of the text input;
- a search engine for searching the databases to find sign language translations for the text input;
- A display module for displaying the sign language translations in real-time within the chat application, wherein the sign language translations correspond to the text input; and
- Integration means for seamlessly integrating the sign language translations into the chat application, wherein the sign language translations are displayed alongside the corresponding chat messages to enable real-time communication between users in text and sign language formats.

In one aspect, the chat application with integrated sign language translation capabilities further comprises statistical tools for rating phrases and words based on usage frequency in translation searches.

In one aspect, the analysis of the text input comprises:
- a phrases database storing multiple phrases and their corresponding sign language translations;
- a words database storing individual words and their corresponding sign language translations;
- a root words database storing root words and their corresponding sign language translations; and
- morphemes and letters databases storing smaller structural units and their corresponding sign language translations.

In yet another aspect, the present invention relates to a sign language translation method comprising: receiving a text to be translated and hierarchically analyzing one or more sections of said text from the phrase level through individual words, root words, and the composing morphemes and letters thereof while considering the context of the text.

In one aspect, the method comprises:
- providing a central computer adapted with suitable processing, memory, and storage hardware for executing instruction sets of a dedicated sign-language translation agent, storing one or more translation databases, and communicating with one or more sign-language translation client applications, wherein each of said one or more translation databases comprises text sections and sign language translation thereof;
- processing the received text to detect basic text sections;
- searching within said one or more translation databases for the detected basic text sections and sign language translation thereof;
- processing the remaining untranslated portions of the received text following the above step of searching within said one or more translation databases for the detected basic text sections and sign language translation thereof to detect additional basic text sections;
- searching within said one or more translation databases for the additional detected basic text sections and sign language translation thereof;
- repeating the steps of processing and searching until obtaining a sign language translation of the entire received text; and
- returning the obtained sign language translation for displaying on a user device.

In another aspect, the method comprises providing a learning module configured to receive captured stills and video images of a person expressing sign language and store the captured images in conjunction with their corresponding textual meaning.

In one aspect, the images are captured by a camera of the user's device.

In one aspect, the corresponding textual meaning is one or more of the following: phrases, words, root words, morphemes, and letters.

In one aspect, the sign-language translation client application is embedded within an Internet browser, a webpage, or a website, thereby enabling to select text on a webpage to be translated into sign language, providing the selected text to the central computer via said sign-language translation client application and displaying the text's translation in the sign language via said Internet browser on the user device.

According to an embodiment of the invention, the translation can be from text to sign language or *vice-versa.*

In one aspect, the method further comprises providing/generating QR code(s) that link to sign language translation of text/speech.

In one aspect, the QR codes are adapted to be assigned to pharmaceutical packaging, prescriptions, and labels to communicate better to hearing-impaired people.

In yet another aspect, the present invention relates to a sign language translation system that comprises:
- a central computer adapted with processing, memory, storage, and communication hardware, said central computer is configured to execute instruction sets of a dedicated sign language translation agent, to store one or more translation databases thereof, and to communicate with one or more sign-language translation client applications running in user devices, wherein each of said one or more translation databases comprises common text sections and sign language translation thereof; and
- one or more user devices adapted to run a sign-language translation client application, which is configured to utilize said one or more user devices' input, communication, and display hardware to receive input text for translation, to submit said input text to said central computer and to receive corresponding sign language translation of said input text from said central computer, and to display said corresponding sign language translation to users,
   characterizing with that said sign language translation agent and said one or more translation databases are adapted to analyze and translate said input text hierarchically.

### Brief Description of the Drawings

The above and other characteristics and advantages of the invention will be better understood through the following illustrative and non-limitative detailed description of preferred embodiments thereof, with reference to the appended drawings, wherein:
- Fig. 1A illustrates a flow chart of an exemplary translation process of the proposed sign language translation method, according to an embodiment of the invention;
- Fig. 1B illustrates a flow chart of a translation process of the proposed sign language translation method, according to another embodiment of the invention;
- Fig. 2 illustrates a sign language translation system, according to an embodiment of the invention;
- Fig. 3 illustrates an exemplary configuration of a dedicated sign language translation agent, according to an embodiment of the invention; and
- Fig. 4 shows an exemplary screenshot of a dedicated sign language translation application, according to an embodiment of the invention.

### A detailed description of the Invention

The present invention relates a sign language translation method, which is adapted to perform hierarchical analysis of sections of an entered text to be translated into sign language, from the phrase level through individual words, root words, and the composing morphemes and letters thereof, thereby finding the corresponding sign language translation in a fast and accurate manner, insusceptible to similarly written words with different meanings and to words that are identically written in different contexts pertaining different meaning, where the resulting sign language translation considers the context of the words. The invention also relates to a text-to-sign language translation system for realizing the proposed method. According to an embodiment of the invention, the invention relates to a method and system for integrating a sign language translation system into a chat application.

In the following detailed description, references are made to the accompanying drawings that form a part hereof and are shown by way of illustrating specific embodiments or examples. These embodiments may be combined, other embodiments may be utilized, and other changes may be made without departing from the present invention's spirit or scope.

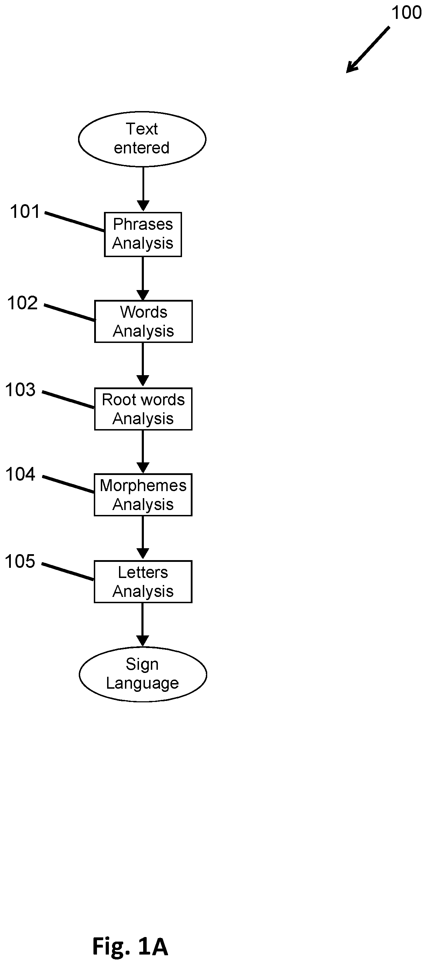

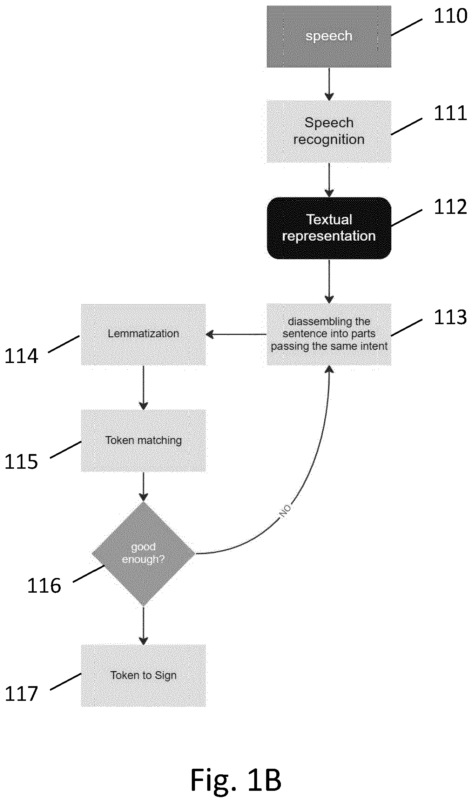

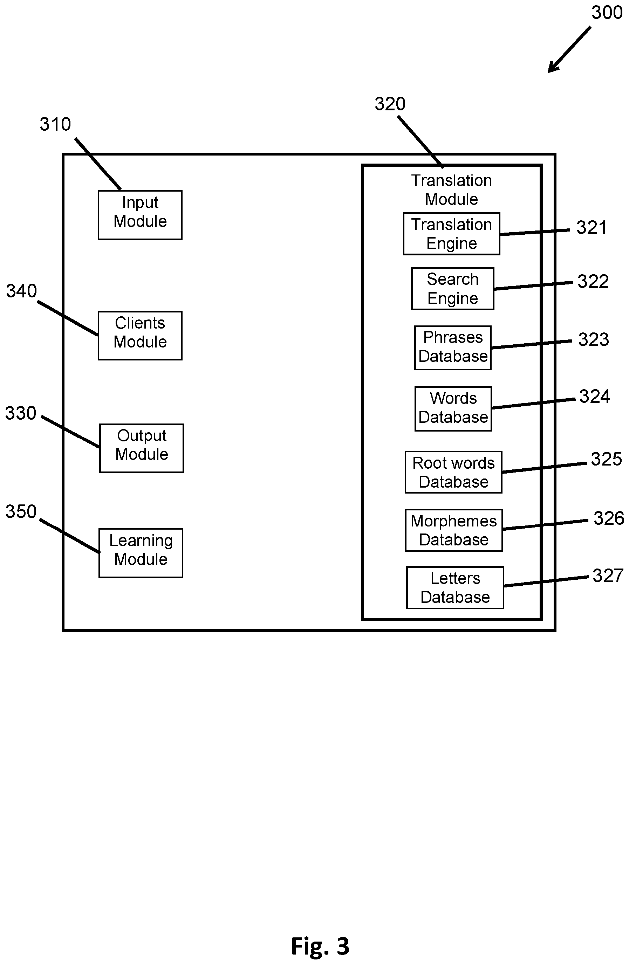

Fig. 1A illustrates a flow chart of an exemplary translation process of the proposed sign language translation method 100, according to an embodiment of the invention. The first step 101 of method 100 is searching complete phrases, of the entered text for translation, in a phrases database (described in Fig. 3), storing multiple phrases and the corresponding sign language translation (i.e., each of the stored phrases with its corresponding sequence of sign language sign). This translation step enables a relatively fast translation of text phrases while considering the context, thus avoiding possible translation faults (e.g., "nearest subway station" or in a different context - "nearest subway^{®} food store"). Considering the context during the translation process is described in further detail hereinafter with respect to Fig. 1B).

The entered text portion which is not translated in step 101 (i.e., no phrases from which are identified in a corresponding phrases database), is being analyzed through a second translation step 102, which involves a search of individual words in a corresponding database of words, followed by searching root words search 103, and smaller structural units such as morphemes 104 and letters 105 - until sign language translation is found for the entire text entered. The outcome of this process is an inclusive sequence of sign language signs.

According to an embodiment of the invention, method 100 further utilizes statistical tools to rate phrases and words correspondingly to their usage frequency in translation searches, thereby providing faster translation results.

Fig. 1B illustrates a flow chart of a translation process of the proposed sign language translation method, according to another embodiment of the invention. This figure shows the translation process from speech-to-text to sign language. The translation process, while considering the context, may involve the following procedure:
- Receiving captured/recorded speech (step 110);
- converting speech into text (step 111), e.g., by using/applying any suitable speech recognition algorithm(s), such as **an API powered by Google's** Artificial Intelligence (Al) research and technology or other Al-driven voice-to-text;
- providing a textual representation of the converted speech to text (step 112), e.g., a sentence that textually represents a word, clause, or phrase or a group of clauses or phrases forming a syntactic unit that expresses an assertion, a question, a command, a wish, an exclamation, or the performance of an action;
- disassembling the sentence into parts passing the same intent (step 113);
- performing lemmatization to find the meaning (which depends on the context) of the word or the element of the sentence (step 114). The lemmatization may involve grouping together the inflected forms of a word so they can be analyzed as a single item (e.g., as identified by the word's lemma (i.e., root word) or dictionary form), and it can be achieved by using any suitable lemmatizer technique;
- Matching tokens (step 115). In this step, the system finds a token or a set of tokens that can convey the meaning behind the lemma. The goal is to divide the sentence in a way that brings as few tokens as possible, with each one being as adapted as possible to the lemma (and with as less spelling as possible). For example, the word "better" has "good" as its lemma, thus after applying lemmatization, the sentence **"feel better" can be converted to** "feel **good", and accordingly matching th**at converted form to a token (examples for tokens: **"feel good"/["f","e","e","l","g","o","o","d"]/["feel","good"]);**
- At next (step 116), if no token matching is found (or the matching is less than a predefined threshold), return to step 113 for further disassembling the sentence (i.e., repeating steps 113 to 116) until obtaining token matching;
- Upon obtaining token(s) matching, convert the token to sign language (step 117).

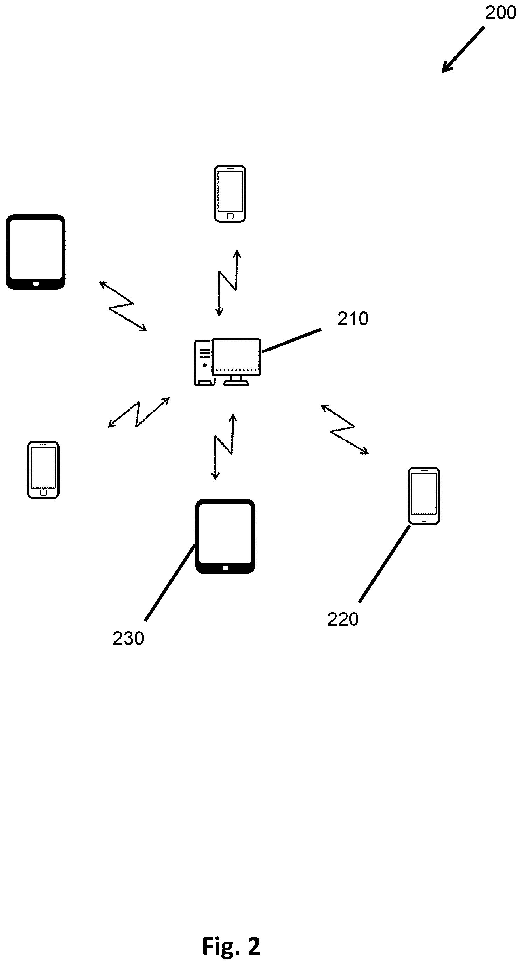

Fig. 2 illustrates a sign language translation system 200, according to an embodiment of the invention. System 200 comprises a central computer 210 (e.g., server, cloud computing, and the like) adapted with suitable processing, memory, and storage hardware, for executing instruction sets of a dedicated text-to-sign language translation agent 211, for storing multiple translation databases thereof, and for communicating with one or more sign-language translation client applications 221 and 231 operated by user devices, such as personal computers, mobile devices, etc. For example, mobile devices can be smartphones 220 and tablets 230, enabling users to operate a user interface of the sign-language translation client application to provide a text for translation (e.g., either by typing the text or by selecting a displayed text), which is submitted to the central computer 210, and to show a corresponding sequence of sign language sign of the same meaning, received in return from the central computer 210, such as displaying an animated sequence of sign language signs, such as shown in Fig. 4 which shows an exemplary screenshot of a sign-language translation client application, according to an embodiment of the invention. In this example of Fig. 4, the animated sequence of the sign language is performed/displayed by an avatar 401, which is part of a sign-language translation client application 400 that runs on smartphone 220. In this specific example, the text **"Good Morning" (as indicated by numeral 402** on a display module 403 of smartphone 220) is translated into sign language, and avatar 401 performs the **representation of this text (i.e., "Good Morning")** in sign language. For example, client application 400 can be a dedicated application or integrated into existing chat applications, such as WhatsApp by WhatsApp LLC or other instant messaging platforms.

In specific embodiments of the invention, there exists a capability to integrate the sign-language translation client application within various web interfaces. This includes integration within an Internet browser, a specific webpage, or an entire website. With this integration, users browsing a webpage can conveniently select a segment of text they wish to translate into sign language. Upon selection, the system facilitates the transfer of this selected text to the sign-language translation client application. As a response to this, an avatar, for instance, avatar 401, may be triggered to appear on the user's screen. This avatar is designed to visually demonstrate the translation of the selected text into sign language in real-time.

To further enhance user experience and interactivity, there's a potential use of JavaScript's Selection API. This API can be triggered when a user selects text on a webpage. It grants access to both the location and the content of the user's selected text. Leveraging this, a selection menu, possibly displayed directly above the selected text, can be introduced. This menu serves as a gateway for users to access the translation application directly and obtain the sign language translation for their chosen text. Moreover, users have multiple options for text input. They can either let the system automatically copy the selected text, opt to do it manually, or even manually input the desired text for translation. Once provided, this text is placed into a dedicated input field within the translation application, ready for the translation process.

The present invention also includes an embodiment that integrates the sign language translation method and system into a chat application, such as Whatsapp or other instant messaging platforms. This integration allows users to translate their text messages into sign language directly within the chat application, providing a seamless and convenient translation experience for users.

To enable this integration, the translation method and system are adapted to work in conjunction with the chat application and its user interface. The following describes the technical details of the integration:
1. User Interface Integration:
   - The chat application incorporates a user interface element, such as a button or menu option, that allows users to access the sign language translation feature.
   - Upon selecting the translation option, the entered text to be translated is extracted from the chat input field or selected text within the chat.
2. Text Processing and Translation:
   - The extracted text is passed to the sign language translation system, which performs the hierarchical analysis described in the previous sections (e.g., steps 101-105 in Fig. 1A).
   - The translation system utilizes its databases (phrases database, words database, root words database, morphemes database, and letters database) to find the corresponding sign language translation for the text.
3. Translation Result Display:
   - The translation system generates a sequence of sign language signs that represent the translated text.
   - The resulting sign language translation is returned to the chat application for display within the user interface.
   - The translated sign language sequence can be displayed as an animated sequence of sign language signs, similar to the example shown in Fig. 4.
4. Real-Time Translation:
   - To support real-time translation during chat conversations, the integration continuously processes the entered text and updates the sign language translation as the user types or modifies the text.
   - The translation system reanalyzes the modified text and provides an updated sign language translation in real-time, ensuring that the translation remains accurate and contextually relevant.
5. Multimedia Translation:
   - In addition to text translation, the integration can also support the translation of multimedia content, such as voice messages or video clips containing sign language.
   - Voice messages or recorded sign language videos can be processed by the translation system, which converts the audio into text (using speech recognition algorithms described in Fig. 1B) and subsequently translates it into sign language.
6. Customization and Personalization:
   - The integration may allow users to customize the translation settings, such as choosing specific sign language variants or adjusting translation preferences.
   - Users may also have the option to create and maintain their own personalized translation databases, which can include frequently used phrases or specialized terminology.

By integrating the sign language translation method and system into a chat application, users can easily communicate with each other in sign language, bridging the communication gap between sign language users and non-sign language users. This integration enhances accessibility and inclusivity in digital communication platforms, enabling effective communication for individuals who rely on sign language.

The chat application with sign language translation capabilities disclosed herein addresses the limitations of existing communication systems by providing an integrated solution that allows users to communicate seamlessly in both text and sign language formats. The application incorporates a sign language translation module that translates text-based messages into corresponding sign language representations in real-time. This enables users to communicate with each other, regardless of whether they are proficient in sign language or not, thus enhancing inclusivity and promoting effective communication.

In one embodiment, the chat application includes a user interface that displays chat messages and receives user inputs within the application. Users can enter text-based messages using a text input receiving means provided by the application. The sign language translation module performs analysis of the text input (e.g., hierarchical analysis), leveraging various databases to generate corresponding sign language translations.

According to an embodiment of the invention, the sign language translation module comprises a phrases database, a words database, a root words database, and morphemes and letters databases. The phrases database stores multiple phrases and their corresponding sign language translations, while the words database stores individual words and their corresponding sign language translations. The root words database stores root words and their corresponding sign language translations. The morphemes and letters databases store smaller structural units and their corresponding sign language translations. These databases allow the translation module to effectively translate text inputs into sign language representations.

According to some embodiments of the invention, to optimize the translation process, statistical tools are implemented within the translation module. These tools rate phrases and words based on their frequency of usage in translation searches, ensuring that commonly used expressions and terms are accurately translated. The translation module utilizes a search engine to search the databases and retrieve the appropriate sign language translations for the text input.

The chat application further includes a display module that presents the sign language translations in real-time within the chat interface. The sign language translations are seamlessly integrated alongside the corresponding text-based messages, allowing users to communicate effectively using both text and sign language formats. This integration enables real-time communication, enhancing the inclusivity of the chat application and facilitating communication between individuals proficient in different modes of communication.

The chat application with sign language translation capabilities described herein provides an innovative solution for inclusive communication. By seamlessly integrating sign language translations into a text-based chat application, it enables real-time communication between individuals using text and sign language formats. This promotes effective communication, enhances inclusivity, and improves accessibility for individuals with hearing impairments or those who prefer sign language as their mode of communication.

According to an embodiment of the invention, the system comprises QR codes that link to sign language translation of text/speech (e.g., a pre-recorded video clip). The QR codes can be added to different objects/items to enable hearing-impaired people to communicate better and understand information associated with such objects/items. For example, such QR codes can be used on pharmaceutical packaging, prescriptions, and labels to communicate better to hearing-impaired people.

Fig. 3 illustrates an exemplary configuration of a dedicated sign language translation agent 300, according to an embodiment of the invention. Translation agent 300 comprises an input module 310 adapted to receive a text for translation (i.e., submitted from authorized mobile devices 220 and 230), and a translation module 320 comprising a translation engine 321 for managing the entered text hierarchical translation process through steps 101-105 (of Fig. 1A), while utilizing a search engine 322 to search in databases 323-327 for analyzed text sections (i.e., phrases, words, root words, morphemes, and letters) to be translated.

For example, whereas translation engine 321 receives one or more text sentences from the input module 310, it executes step 101 (of Fig. 1A) by analyzing the text to detect phrases (e.g., a sequence of two or three words) and utilizes search engine 322 to search for detected phrases in phrases database 323. Translation engine 321 records sign language translation found for detected phrases, and it further processes the remaining text through step 102 (of Fig. 1A) by disassembling the text to individual words (e.g., utilizing detected spaces between words) and operating search engine 322 to search for the detected words and translation thereof within words database 324. Translation engine 321 records sign language translation found for detected words and further processes the remaining text through step 103 (of Fig. 1A) by disassembling each of the remaining words to root words, such as by removing prefix and suffix morphemes ("ing", "ist", etc.) and operating search engine 322 to search for the detected root words and translation thereof within root words database 324. As required, translation engine 321 analyzes smaller textual sections (i.e., morphemes and letters) until the translation of the entire text is completed.

Finally, translation engine 321 assembles the sign language translation sequences in the original order (i.e., correspond to the enter text's order) and submits the assembled translation to an output module 330, which submits the assembled translation to the sending user (e.g., by utilizing communications means of computer 210.

Of course, the translation agent 300 may further comprise common operational software modules such as clients module 340 for managing users and client devices authorized to interact with translation agent 300 (e.g., through corresponding sign-language translation client applications running on mobile devices 220 and 230).

According to an embodiment of the invention, agent 211 may be adapted with a learning module 350, while applications 221 and/or 231 are adapted with a corresponding learning module 351 (not shown), which is configured to receive captured stills and video images of a person expressing sign language sign (i.e., captured by the camera(s) of a smartphone 220, or tablet 230 and correspondingly processed by module 350 of applications 221 and 231) and to store the captured images in conjunction with their corresponding textual meaning (i.e., phrases, words, root words, morphemes, and letters) determined by the person, in databases 323-327 (i.e., by interacting with module 350). Thereby, modules 350 and 351 enable the expansion of translation databases 323-327. Furthermore, modules 350 and 351 may be utilized for adding further translation databases 323a-327a (not shown) associated with alternate languages.

According to another embodiment of the invention, one or more databases 323-327 are locally stored, for example, by smartphones 220. For example, phrases database 323 can be stored locally; thus, the initial translation search (first step 101 of Fig. 1A) is executed locally (e.g., application 221 is adapted with a lean translation module comprising a suitable translation engine and search engine for searching the local phrases database 323), while further required translation steps 102-105 are executed by agent 300 of main computer 210. Executing a portion of the translation may be processed locally, enabling faster translation speeds while reducing the central computer 210. Furthermore, the locally stored databases may be periodically updated with databases 323-327 of central computer 210.

Local databases (e.g., phrases database 323) of applications 221 and 231 may also be utilized for generating and maintaining local, personalized translation databases. For example, they store specific terms that specific users commonly use. Such local databases may be uploaded to central computer 210 (e.g., for backup purposes).

According to an embodiment of the invention, input module 310 and learning modules 350 and 351 may be adapted for receiving speech input (e.g., recorded by a microphone of a mobile device such as smartphones 220 and tablets 230). Furthermore, central computer 210 and mobile devices 220 and 230 may be correspondingly configured with speech-to-sign language translation databases organized and utilized similarly, as described in Figs. 1-3, where recorded speech to be translated to sign language is hierarchically (i.e., phrases, words, root words, phonemes, letters) analyzed as described hereinabove. Moreover, according to an embodiment of the invention, integrated speech and text translation databases are utilized, storing phrases, words, root words, phonemes, morphemes, and letters in conjunction with their sign language translation.

One skilled in the art will readily realize that the proposed method and system may also be used *vice-versa,* for instance, where input module 310 receives captured stills and video images of a person expressing sign language signing, processes them, and output module 330 returns corresponding text. In some embodiments, a suitable mediating or processing module that may be required for processing input sign language is provided as a separate module from input module 310. According to some embodiment of the invention, distinctive body postures and facial expressions that accompany signing and are necessary to form words properly are also considered while processing the received images. The distinctive body postures and facial expressions are one of five sign components, along with hand shape, orientation, location, and movement. For example, distinctive body postures and facial expressions can be detected by applying suitable Facial Expression Recognition (FER) algorithms (e.g., Eigenspace technique to locate face under variable pose, Haar classifier, AdaBoost method, etc.).

Although embodiments of the invention have been described by way of illustration, it will be understood that the invention may be carried out with many variations, modifications, and adaptations, without exceeding the scope of the claims.

## Claims

1. A computer-implemented method for integrating a sign language translation system into a chat application, comprising:
a) receiving a text input for translation within the chat application;
b) performing analysis of the text input;
c) generating an inclusive sequence of sign language signs based on the analysis of the text input; and
d) integrating the generated sign language signs into the chat application, wherein the sign language signs are displayed to represent the translation of the text input in real-time.

2. The method of claim 1, wherein the analysis of the text input is performed by a hierarchical analysis, including:
a) Searching complete phrases of the text input in a phrases database to find corresponding sign language translations, thereby providing a fast and accurate translation of text phrases while considering the context; and
b) Analyzing remaining portions of the text input by searching individual words in a words database, searching root words in a root words database, and searching morphemes and letters in corresponding databases until a sign language translation is found for the entire text input.

3. The method of claim 1, further comprising utilizing statistical tools to rate phrases and words correspondingly to their usage frequency in translation searches, thereby improving the speed of translation results.

4. A method according to claim 1, wherein the translation comprising receiving a text to be translated, and hierarchically analyzing and providing corresponding sign language translation for one or more sections of said text from the phrase level through individual words, root words, and the composing morphemes and letters thereof, while considering the context of the text.

5. A method according to claim 4, wherein the hierarchical analysis and translation comprises:
a) providing a central computer adapted with suitable processing, memory, and storage hardware for executing instruction sets of a dedicated sign language translation agent adapted to receive text and to perform hierarchical analysis of said received text, storing one or more translation databases for text phrases, individual words, root words, morphemes and letters, and communicating with one or more sign-language translation client applications, wherein each of said one or more translation databases comprises text sections and corresponding sign language translation thereof;
b) processing the received text to detect text phrases;
c) searching in a phrases database within said one or more translation databases for the detected text phrases and corresponding sign language translation thereof;
d) processing the remaining untranslated portions of the received text following step c, to detect words;
e) searching in a words database within said one or more translation databases for the detected words and corresponding sign language translation thereof;
f) repeating steps d and e with root words, morphemes, and letters until obtaining sign language translation for the entire received text; and
g) returning the obtained sign language translation for displaying on a user device.

6. A method according to claim 5, further comprises providing a learning module configured to receive captured stills and video images of a person expressing sign language and store the captured images in conjunction with their corresponding textual meaning.

7. A method according to claim 6, wherein the images are captured by a camera of the user device.

8. A method according to claim 6, wherein the corresponding textual meaning is one or more of the following: phrases, words, root words, morphemes, and letters.

9. A method according to claim 5, wherein the sign-language translation client application is embedded within an Internet browser, a webpage, or a website, thereby enabling select text on a webpage to be translated into the sign language, providing the selected text to the central computer via said sign-language translation client application and displaying the text's translation in the sign language via said Internet browser on the user device.

10. A method according to claim 1, wherein the translation can be from text to sign language or *vice-versa.*

11. A method according to claim 5, further comprising providing QR code(s) that link to sign language translation of text/speech.

12. A method according to claim 11, wherein the QR codes are adapted to be assigned on pharmaceutical packaging, prescriptions, and labels to communicate better to hearing-impaired people.

13. A chat application with integrated sign language translation capabilities comprising:
a) A user interface for displaying chat messages and receiving user inputs within the chat application;
b) Text input receiving means for receiving a text input from a user within the chat application;
c) Sign language translation module configured to perform analysis of the text input;
d) a search engine for searching the databases to find sign language translations for the text input;
e) A display module for displaying the sign language translations in real-time within the chat application, wherein the sign language translations correspond to the text input; and
f) Integration means for seamlessly integrating the sign language translations into the chat application, wherein the sign language translations are displayed alongside the corresponding chat messages to enable real-time communication between users in text and sign language formats.

14. The chat application of claim 13, further comprising statistical tools for rating phrases and words based on usage frequency in translation searches.

15. A sign language translation system, comprising:
a) a central computer adapted with processing, memory, storage, and communication hardware, said central computer is configured to execute instruction sets of a dedicated sign language translation agent, to store one or more translation databases thereof, and to communicate with one or more sign-language translation client applications running in user devices, wherein each of said one or more translation databases comprises common text sections and sign language translation thereof; and
b) one or more user devices adapted to run a sign-language translation client application, which is configured to utilize said one or more user devices' input, communication, and display hardware to receive input text for translation, to submit said input text to said central computer and to receive corresponding sign language translation of said input text from said central computer, and to display said corresponding sign language translation to users,
characterizing with that said sign language translation agent and said one or more translation databases are adapted to analyze and translate said input text hierarchically and while considering the context of the text.
